# EUROPÄISCHE PATENTSCHRIFT

(11) **EP 2 069 742 B1**
(45) Veröffentlichungstag und Bekanntmachung des Hinweises auf die Patenterteilung: **04.08.2010**
(21) Anmeldenummer: 07818456.1
(22) Anmeldetag: 26.09.2007
(51) Int. Cl.: G01M 3/00

(54) **VERFAHREN UND VORRICHTUNG ZUR BESTIMMUNG DES GASDRUCKES IN EVAKUIERTEN KÖRPERN**
METHOD AND DEVICE FOR DETERMINING THE GAS PRESSURE IN EVACUATED BODIES
PROCÉDÉ ET DISPOSITIF DESTINÉS À DÉTERMINER LA PRESSION GAZEUSE DANS DES CORPS ÉVACUÉS

(30) Priorität: 26.09.2006 DE 102006045471
(43) Veröffentlichungstag der Anmeldung: 17.06.2009
(73) Patentinhaber: va-Q-tec AG, 97080 Würzburg (DE)
(72) Erfinder: CAPS, Roland, 63839 Kleinwallstadt (DE)
(74) Vertreter: Küchler, Stefan
(86) Internationale Anmeldenummer: PCT/EP2007/008373
(87) Internationale Veröffentlichungsnummer: WO 2008/037451

(56) Entgegenhaltungen:
- DE-A1- 10 117 021
- DE-C1- 10 215 213
- JP-A- 62 215 194

## Beschreibung

Die Erfindung richtet sich auf ein Verfahren und ein System zur Anwendung eines thermischen Meßverfahrens auf die Bestimmung des Gasdruckes in einem Vakuumelement oder in einem evakuierten Körper, insbesondere mit einer folienartigen Umhüllung, an dessen Außenseite eine Lasche gebildet ist, die von zwei Folienseiten begrenzt ist, welche im Bereich des freien Randes der Lasche miteinander verbunden sind. Ziel der Erfindung ist es insbesondere, den Gasdruck in folienumhüllten Vakuumdämmplatten von außen zu messen.

Eine umfassende, schnelle und ausreichend genaue Bestimmung des Gasdruckes in folienumhüllten Vakuumdämmplatten ist eine wichtige Voraussetzung für eine erfolgreiche Produktionskontrolle und Qualitätssicherung dieser Produkte. Es sind mehrere Verfahren bekannt, den Gasdruck in Vakuumdämmplatten zu testen. Am einfachsten ist das Beobachten der Aufblähung der Hülle bei einer äußeren Gasdruckverminderung, indem die Vakuumdämmplatten z. B. in einer Vakuumkammer einem Unterdruck ausgesetzt werden. Hier ist keine Modifikation der Vakuumdämmplatte erforderlich. Nachteil ist der relativ große apparative Aufwand und die relativ lange Messdauer im Bereich von Minuten. Zudem ist eine Mindestgröße der zu testenden Probe notwendig, damit sich die Hüllfolie frei heben kann.

In einem weiteren, aus der DE 102 15 213 bekannten Verfahren wird eine Metallscheibe, auf der sich ein dünnes Glasfaservlies befindet, in die Vakuumdämmplatte zwischen Hüllfolie und Dämmkern eingelegt. Die Metallscheibe dient als Wärmesenke. Von außen wird ein Messkopf mit erhöhter Temperatur aufgesetzt und der Wärmedurchgang durch das Glasfaservlies in die kalte Metallscheibe gemessen. Dieser Wärmedurchgang ist vom Gasdruck im Inneren der Vakuumdämmplatte abhängig. Die Messzeit dieses Verfahrens liegt im Bereich von 10 Sekunden. Nachteil dieses Verfahrens ist, dass die eingelegte Metallscheibe bei einer Dicke von z. B. 2 mm störend aus der Oberfläche herausragt. Um dies zu vermeiden, müsste eine entsprechende Vertiefung im Dämmkern vorgesehen werden, was mit einem gewissen Produktionsaufwand verbunden ist. Bei einem Stapel von Vakuumdämmplatten sind die Metallscheiben zudem nicht für die Messung zugänglich, da sie nicht an der freiliegenden Seitenkante angebracht werden können.

Aus den geschilderten Zusammenhängen resultiert das die Erfindung initiierende Problem, ein Verfahren zur Gasdruckmessung zu finden, das diese nachteile vermeidet.

Die Lösung dieses Problems gelingt bei einem gattungsgemäßen Verfahren dadurch, dass an einer Lasche an der Außenseite des Vakuumelements, die von zwei Folienseiten gebildet ist, welche im Bereich des freien Randes der Laschen miteinander verbunden sind und einen Zwischenraum begrenzen, der mit dem Raum innerhalb der Umhüllung des Vakuumelements kommuniziert und zumindest teilweise durch eine offenporige, dünne Materiallage gefüllt ist, der gasdruckabhängige Wärmedurchgangskoeffzient an wenigstens einer Stelle der Materiallage gemessen wird.

Die Erfindung geht dabei aus von der Erkenntnis, das der Wärmedurchgang durch eine poröse Materiallage von dem Gasdruck in den Poren bzw. Zwischenräumen der Materiallage abhängt, sofern das Material selbst einen möglichst geringen Wärmedurchgang hat, denn dann trägt die Luft in den Poren oder Zwischenräumen wesentlich zur Wärmeleitung bei. Diese Randbedingung ist bei vielen Nichtmetallen erfüllt. Die Wärmeleitfähigkeit λ des Materials der offenporigen, dünnen Materiallage sollte daher kleiner sein als 100 W/mK, bspw. gleich oder kleiner als 50 W/mK, vorzugsweise gleich oder kleiner als 20 W/mK, insbesondere gleich oder kleiner als 10 W/mK, ggf. sogar gleich oder kleiner als 5 W/mK oder gar gleich oder kleiner als 2 W/mK.

Eine Vakuumdämmplatte wird dadurch hergestellt, dass ein offenporiger, druckbelastbarer Dämmkern in eine Tasche aus einer vakuumdichten Hüllfolie eingeschoben wird. Dabei entstehen mit Siegelnähten abgeschlossene Folienlaschen, die über den Kern hinaus stehen. In diese Laschen kann erfindungsgemäß ein dünnes Vliesmaterial eingelegt werden, wobei es vorteilhaft ist, dass das Vliesmaterial Verbindung zum Dämmkern hat. Damit ist sichergestellt, dass im Dämmkern und in der Testfläche des Vliesmaterial der gleiche Gasdruck herrscht. Das Vliesmaterial muss zumindest im Bereich der Messfläche homogen sein und vorzugsweise eine gleichmäßige Flächenbelegung aufweisen. Es darf in der Messfläche nach Möglichkeit keine Falten oder Knitter bilden.

Bei einem anderen Herstellungsverfahren wird der Dämmkern mit einer einzigen Barrierefolie umhüllt und eine Siegelnaht über die Oberseite der Platte gelegt. Die beiden, dazu quer liegenden Nähte werden üblicherweise nahe an den Dämmkern herangefaltet. Es ist aber auch möglich, die Faltung so auszuführen, dass an mindestens einer der beiden Siegelnähte eine vom Dämmkern abstehende Lasche entsteht. In diese Lasche kann vor dem Versiegeln der Folien ebenfalls das dünne Testvliesmaterial eingelegt werden. Gegebenenfalls kann auch das Vlies, mit dem der Kern zum Staubschutz umhüllt ist, genutzt werden. Der Wärmedurchgangskoeffizient der Lasche bzw. des Verbundes obere Folie - Vliesmaterial - untere Folie kann nach der Fertigstellung der Vakuumdämmplatte gemessen werden.

Bei der Herstellung einer erfindungsgemäßen Vakuumdämmplatte wird in eine herausstehenden Lasche, die durch die Hüllfolie gebildet ist, eine dünne Lage eines offenporigen, wärmeisolierenden Materials, z. B. ein Glasfaservlies gelegt. Nach der Fertigstellung der Vakuumdämmplatte wird der Wärmedurchgang an der Lasche gemessen und daraus der Gasdruck im Inneren abgeleitet. Die Größe der Messfläche an der dünnen Materiallage soll dabei vorzugsweise etwa 5 - 10 cm² betragen. Entsprechend ist auch die Mindestgröße und Flächenform der dünnen Materiallage zu wählen.

Es hat sich als günstig erwiesen, dass die beiden den gefüllten Zwischenraum begrenzenden Folienseiten über ihrer gesamten an den Zwischenraum angrenzenden Fläche dem Differenzdruck zwischen dem inneren Vakuum und dem äußeren, atmosphärischen Druck ausgesetzt werden.

Durch die Vlieseinlage werden die beiden Folien thermisch getrennt. Es bildet sich ein Wärmewiderstand aus, der vom Gasdruck in der Einlage abhängt. Wenn der Hohlraum für die offenporige Einlage in Verbindung mit dem offenporigen Dämmkern steht, herrscht in der Einlage der gleiche Gasdruck wie im Dämmkern. Wird ein Vlies genutzt, das den Kern gegebenenfalls umhüllt, so ist diese Verbindung automatisch gegeben.

Der Wärmedurchgang durch die so präparierte Folienlasche wird vorzugsweise mit Hilfe von zwei Wärmeflussmessern gemessen, die jeweils an einer temperierten Metallplatte befestigt sind. Die Folienlasche mit Testvlies wird dabei zwischen die beiden Wärmeflussplatten gelegt, wobei die unterschiedlich temperierten Metallplatten jeweils nach außen zeigen. Da die Wärmekapazitäten der beiden Hüllfolien der Lasche und des dünnen Vlieses gering sind, stellt sich schnell ein stationärer Zustand des Wärmestroms ein. Aus der Temperaturdifferenz und des Mittels des Wärmestroms beider Wärmestrommesser wird der Wärmedurchgangskoeffizient des Systems Folie - Testvlies - Folie berechnet. Ist die Dicke des Testvlieses und der Wärmewiderstand der beiden Folien bekannt, kann auch die Wärmeleitfähigkeit des Testvlieses berechnet werden. Aus der bekannten Abhängigkeit der Wärmeleitfähigkeit des Testvlieses vom Gasdruck, die über separate Messungen des Testvliesmaterials bestimmbar ist, kann wiederum auf den Gasdruck im Inneren der Vakuumdämmplatte geschlossen werden.

Vorteil der Messung des Wärmedurchgangskoeffizienten mit zwei Wärmestrommessern ist, dass erfahrungsgemäß der Mittelwert aus beiden Sensoren nach einer kurzen Einschwingzeit, die vom instationären thermischen Verfahren der Messprobe abhängt, sehr schnell den stationären Wert anzeigt. Es sind Messzeiten von 5 Sekunden und darunter möglich.

Es liegt im Rahmen der Erfindung, dass so lange gemessen wird, bis sich ein weitgehend stationärer Verlauf des Wärmestroms eingestellt hat.

Ferner hat es sich bewährt, dass zur Bestimmung des Wärmestroms der Mittelwert aus beiden Wärmestrommessern verwendet wird.

Prinzipiell ist aber auch ein Messaufbau mit nur einem Wärmestrommmesser denkbar, indem insbesondere nur ein Körper verwendet wird, der einen Wärmestrommesser aufweist.

Die Erfindung sieht weiterhin vor, dass die Temepraturen wenigstens eines Wärmestrommessers und/oder wenigstens eines temperierten Körpers mit Hilfe von Temperatursensoren erfaßt werden, die in direktem Kontakt mit dem/den betreffenden Wärmestrommessern und/oder temperierten Körpern stehen.

Der üblicherweise nur wenige Zehntel Millimeter dicke Wärmestrommesser sollte in eine Vertiefung der Temperierplatte eingelassen sein, so dass außerhalb des Wärmestrommessers ein Schutzring entsteht. Die Oberfläche des Wärmestrommessers, der typischerweise einen Durchmesser von 20 mm aufweist, und der Schutzring der Temperierplatte bilden eine durchgehende Oberfläche. Durch den Schutzring wird verhindert, dass unkontrolliert Wärme über die Folie radial nach außen abfließt. An Stelle einer radialen Anordnung kann natürlich auch eine quadratische oder rechteckförmige Anordnung zur Messung des Wärmedurchgangs gewählt werden.

Um eine gute Kühlung zu erreichen, kann die kühlere Temperierplatte sich auch über eine wesentlich größere Fläche erstrecken. Sie kann gegebenenfalls mit einem Peltierelement oder im einfachsten Fall mit einem Lüfter gekühlt werden.

Die Temperaturen der beiden Temperierplatten werden mit Thermoelementen oder anderen Temperatursensoren gemessen. Wichtig ist, dass eine ausreichend hohe Temperaturdifferenz zwischen beiden Temperierplatten besteht. Dies kann dadurch erreicht werden, dass z. B. eine Metallplatte unter oder nahe Raumtemperatur gekühlt und die zweite Metallplatte geheizt wird. Dabei ist darauf zu achten, dass durch eine ausreichend gute Regelung die Temperaturen auf einem möglichst konstanten Wert gehalten werden. Die Temperaturdifferenz der Temperierplatten kann bis zu 100 K betragen.

Anstelle über einen Wärmestrommesser kann der Wärmestrom auch über die aufgewendete elektrische Leistung zur Heizung einer Temperierplatte durch das Testvlies gemessen werden. Im allgemeinen wird eine Heizfolie zum Heizen der Temperierplatte verwendet. Die Heizfolie sollte dann von einem ausreichend großen thermischen Schutzschirm umgeben sein, dessen Temperatur auf den gleichen Wert geregelt wird.

Erfindungsgemäß kann vorgesehen sein, dass ein Körper verwendet wird, der anstelle eines Wärmeflußmessers nur eine Heizfolie enthält, deren elektrische Leistung ein Maß für den Wärmedurchgangskoeffizient der Folienlasche ist und die gegebenenfalls von einem Schutzring gleicher Temperatur umgeben ist.

Bei einer weiteren Variante der Erfindung wird eine Heizfolie mit Temperatursensor zwischen dem Vakuumdämmkörper und einer umgelegten Folienlasche mit innenliegendem Testvlies platziert. Auf diese Anordnung wird eine Kühlplatte aufgesetzt. Die Heizfolie wird auf eine vorgegebene Temperatur aufgeheizt und die eingebrachte elektrische Heizleistung gemessen. Nach dem Ausklingen instationärer Wärmeströme erhält man eine konstante Heizleistung, die nach dem Teilen durch die angelegte Temperaturdifferenz in rechnerischer Beziehung zum Innengasdruck gesetzt werden kann.

Es hat sich ferner bewährt, dass die beiden, einander gegenüber liegenden Körper zu beiden Seiten der Lasche auf unterschiedlichen Temperaturen gehalten werden.

Um einen guten thermischen Kontakt zwischen den Messköpfen bzw. den Kühlkörpern und der Folienlasche zu erreichen, ist es vorteilhaft, die Messköpfe oder Kühlkörper jeweils mit magnetischen oder magnetisierbaren Teilen auszurüsten, so dass sie sich gegenseitig anziehen und die dazwischenliegende Folienlasche mit definiertem Druck andrücken.

Im Rahmen einer ersten Ausführungsform kann vorgesehen sein, dass wenigstens ein Körper mit wenigstens einem Heizelement geheizt und auf eine konstante Temperatur geregelt wird.

Ferner kann vorgesehen sein, dass wenigstens ein Körper mit wenigstens einer Kühleinrichtung wie einem Peltierelement, Wärmetauscher, insbesondere für Kühlwasser, Lüfter, oder durch natürliche Konvektion gekühlt und auf einer möglichst konstanten Temperatur nahe der Raumtemperatur oder darunter gehalten wird. Insbesondere wenn - wie die Erfindung weiterhin vorsieht - die Folienlasche mit der Materiallage einmal um 180 ° gefaltet wird, so läßt sich ein Folienheizelement mit Temperatursensor innerhalb der Falte der gefalteten Folienlasche mit Einlage platzieren, und an einer oder beiden Außenseiten der gefalteten Folienlasche (je) ein Kühlkörper oder (je) eine Kühleinrichtung mit im Vergleich zum Folienheizelement niedrigerer Temperatur, dem Folienheizelement etwa gegenüber liegend.

Solchenfalls kann ein guter thermischer Kontakt zwischen der Folienlasche einerseits und den beiden, auf unterschiedlichen Außenseiten der Folienlasche liegenden Kühlkörpern oder -einrichtungen durch magnetische Anziehungskräfte bewirkt werden, welche zwischen einander zugewandten, entgegengesetzten Magnetpolen an oder im Bereich der beiden Kühlkörper oder -einrichtungen auftreten.

Ferner kann ein auf die Solltemperatur temperiertes Folienheizelement innerhalb der Falte der gefalteten Folienlasche platziert werden, auf beiden Seiten können Kühlkörper oder -einrichtungen in Kontakt mit der Folienlasche gebracht werden, und die zeitlich variierende Heizleistung wird so lange verfolgt, bis ein ausreichend stationär bleibender Wert erreicht wird.

Weitere Vorteile ergeben sich dadurch, dass ein aus einer Heizfolie, einem Temperatursensor sowie ggf. Kühlkörpern bestehendes Messelement dauerhaft an/in der Folienlasche belassen wird.

Die Heizfolie kann nach dem Beginn der Messung von der Umgebungstemperatur auf die Solltemperatur aufgeheizt werden, und die Heizleistung wird solange eingebracht und gemessen, bis ein ausreichend stationärer Wert des Wärmestroms erreicht ist.

Ein bevorzugtes, erfindungsgemäßes Verfahren zeichnet sich dadurch aus, dass zur Bestimmung des Wärmedurchgangskoeffzienten durch die Folienlasche
a) eine Heizfolie mit Temperatursensor auf den evakuierten Körper in der Nähe des Randes bzw. nahe der Folienlasche platziert wird,
b) die mit einer dünnen Materiallage gefüllte Folienlasche darüber gelegt wird,
c) darauf ein Kühlkörper oder eine Kühleinrichtung gelegt wird, und
d) die Heizleistung der Folie zum Erreichen und Konstanthalten einer vorgegebenen Temperatur gemessen wird.

Wenn sich die mit einer magnetischen oder magnetisierbaren Scheibe versehene Heizfolie und der mit einem Magnet ausgerüstete Kühlkörper bzw. -einrichtung durch magnetische Kräfte anziehen, so ergibt sich ein guter thermischer Kontakt zwischen Folienlasche und Kühlkörper oder -einrichtung einerseits sowie zwischen Folienlasche und Heizfolie anderseits.

Die Heizfolie mit den elektrischen Anschlüssen und der/die Kühlkörper können permanent auf der Vakuumdämmplatte verbleiben, und die Heizfolie wird nur zur Messung auf die Solltemperatur geheizt.

Zur Bestimmung des Wärmedurchgangskoeffzienten durch die Folienlasche samt eingelegter poröser Materiallage sollte der gemessene Wärmestrom durch die Temperaturdifferenz zwischen den beiden Seiten der Folienlasche geteilt werden.

Die rechnerische Beziehung zwischen Wärmedurchgangskoeffizient und Gasdruck läßt sich aus separaten Messungen bei bekanntem Gasdruck ableiten.

Die Erfindung richtet sich ferner auf ein System zur Bestimmung des Gasdruckes mit Hilfe eines thermischen Meßverfahrens in einem Vakuumelement oder evakuierten Körper, an dessen Außenseite eine Lasche ausgebildet ist, die von zwei Folienseiten begrenzt ist, welche im Bereich des freien Randes der Lasche miteinander verbunden sind, wobei
a) der Raum zwischen den beiden Folienseiten der Lasche mit dem Raum innerhalb der Umhüllung des Vakuumelement kommuniziert und zumindest teilweise durch eine offenporige, dünne Materiallage gefüllt ist, und wobei
b) eine Einrichtung zur Messung des gasdruckabhängigen Wärmedurchgangskoeffzienten der Lasche am Ort der Materiallage vorgesehen ist.

Die den gefüllten Zwischenraum begrenzenden Folienseiten sollten derart angeordnet sein, dass sie über ihrer gesamten, an den Zwischenraum angrenzenden Fläche dem Differenzdruck zwischen dem inneren Vakuum und dem äußeren, atmosphärischen Druck ausgesetzt sind.

Die Folie der Folienlasche kann aus einer Metallfolie bestehen, beispielsweise aus einer Edelstahlfolie mit einer Stärke von 0,5 mm oder weniger, vorzugsweise mit einer Stärke von 0,2 mm oder weniger, insbesondere mit einer Stärke von 0,1 mm oder weniger.

Im Rahmen einer anderen Ausführungsform besteht die Folienlasche aus einer Kunststofffolie, insbesondere aus einer Hochbarrierefolie oder einer Aluminiumverbundfolie.

Bevorzugt handelt es sich bei dem Vakuumelement um eine druckbelastbare Vakuumdämmplatte.

Ein Teil der dünnen Materiallage sollte eine Messfläche mit einer Größe von 0,5 cm² bis 100 cm² enthalten, vorzugsweise mit einer Größe von 2 bis 20 cm², insbesondere mit einer Größe von 5 bis 10 cm²,.

Die dünne Materiallage sollte innerhalb der Messfläche knitter- und faltenfrei liegen.

Die dünne Materiallage kann aus einer oder mehreren Einzellagen bestehen.

Die Erfindung empfiehlt, dass die dünne Materiallage derart mit dem evakuierten Kern, insbesondere Dämmkern, in Verbindung steht, dass im Kern, insbesondere Dämmkem, und in der Materiallage der gleiche Gasdruck herrscht.

Es hat sich bewährt, dass die offenporige, dünne Materiallage einen Unterschied im Wärmedurchgangskoeffizienten zwischen einem maximalen Wert bei hohem Gasdruck bzw. Atmosphärendruck und einem minimalen Wert bei niedrigem Gasdruck bzw. Vakuum (p ≤ 10 mbar, vorzugsweise p ≤ 5 mbar, insbesondere p ≤ 2 mbar) von mindestens dem Faktor zwei, bevorzugt fünf oder mehr, insbesondere zehn oder mehr, aufweist.

Für die Materiallage wird eine Stärke zwischen 0,05 mm und 5 mm liegt bevorzugt, insbesondere zwischen 0,1 mm und 1 mm, oder gar zwischen 0,2 mm und 0,5 mm.

Als offenporige dünne Materiallage läßt sich ein Vlies aus anorganischen oder organischen Fasern verwenden, oder ein Gewebe aus organischen oder anorganischen Fasern, oder eine organische oder anorganische Schaumschicht, oder eine organische oder anorganische Aerogelschicht, oder ein organisches oder anorganische Pulver, oder ein Papier.

Es hat sich als günstig erwiesen, dass die offenporige dünne Materiallage bevorzugt aus einem Glasfaservlies oder Kunststofffaservlies mit einem Flächengewicht zwischen 10 g/m² und 500 g/m² besteht, vorzugsweise zwischen 30 g/m² und 200 g/m², insbesondere zwischen 50 g/m² und 100 g/m².

Die Erfindung zeichnet sich aus durch wenigstens einen Meßkopf mit wenigstens einem temperierten oder temperierbaren Körper, vorzugsweise aus Metall, mit einer Fläche zur Anlage an einem Oberflächenbereich der Lasche eines zu messenden Vakuumelements.

Ein weiteres Merkmal der Erfindung richtet sich auf wenigstens einen Meßkopf mit wenigstens einem Wärmestrommesser, vorzugsweise an oder im Bereich einer zur Anlage an einem Oberflächenbereich der Lasche dienenden Fläche.

Eine bevorzugte Konstruktion umfaßt zwei Meßköpfe mit (je) einem temperierten oder temperierbaren Körper und/oder mit (je) einem Wärmestrommesser, deren Anlageflächen zur Anlage an je einem Oberflächenbereich einer Lasche des zu messenden Vakuumelements einander zugewandt sind.

Dabei können die temperierten Körper der beiden Meßköpfe unterschiedliche Temperaturen haben.

Die Erfindung umfaßt ferner eine Einrichtung, um den temperierbaren Körpern der beiden Meßköpfe unterschiedliche Temperaturen zu erteilen.

Eine erfindungsgemäße Einrichtung dient zur Bestimmung des Mittelwertes aus den Meßsignalen der beiden Wärmestrommesser.

Ein oder mehrere Temperatursensoren zur Erfassung der Temperaturen der temperierten Körper und/oder der Wärmestrommesser stehen in direktem Kontakt mit dem betreffenden Körper und/oder Wärmestrommesser.

Die Erfindung sieht weiterhin vor, dass wenigstens ein Körper anstelle eines Wärmeflussmessers nur eine Heizfolie enthält, deren elektrische Leistung ein Maß für den Wärmedurchgangskoeffizient der Folienlasche ist und die gegebenenfalls von einem Schutzring gleicher Temperatur umgeben ist.

Es liegt im Rahmen der Erfindung, dass einem ersten Körper an einer Seite der Lasche ein weiterer Körper, insbesondere eine Metallplatte, auf der anderen Seite der Lasche gegenüber liegt, der auf einer möglichst gleichmäßigen, gegenüber dem ersten Körper unterschiedlichen Temperatur gehalten ist.

Wenn sich die beiden auf unterschiedlichen Seiten der Folienlasche liegenden Körper magnetisch anziehen, so ist ein guter thermischer Kontakt zwischen der Folienlasche einerseits und den an beiden Seiten anliegenden Meßköpfen andererseits gewährleistet.

Wenigstens ein Körper kann mit wenigstens einem Heizelement zu seiner Aufheizung und/oder Temperaturregelung gekoppelt oder koppelbar sein.

Es hat sich als günstig erwiesen, dass wenigstens ein Körper mit wenigstens einem Kühlelement und/oder mit wenigstens einer Kühleinrichtung, bspw. einem Peltierelement, Wärmetauscher, insbesondere für Kühlwasser, Lüfter oder Kühlrippen, insbesondere für eine natürliche Konvektion, gekoppelt oder koppelbar ist, um auf einer Temperatur nahe der Raumtemperatur oder darunter gehalten zu werden.

Die Erfindung läßt sich dahingehend weiterbilden, dass die Folienlasche mit der Materiallage wenigstens einmal um mehr als 90° gefaltet ist, vorzugsweise um etwa 180°.

Innerhalb der Falte der gefalteten Folienlasche samt Materialeinlage läßt sich ein Folienheizelement mit Temperatursensor platzieren, während an einer oder beiden, einander abgewandten Außenseiten der Folienlasche wenigstens ein Kühlkörper platziert sein kann, vorzugsweise mit im Vergleich zum Folienheizelement niedrigerer Temperatur.

Die Erfindung empfiehlt, dass sich die Kühlkörper an beiden Außenseiten der Folienlasche magnetisch anziehen.

Ein Meßelement, vorzugsweise bestehend aus einer Heizfolie, einem Temperatursensor sowie ggf. Kühlkörpern, kann dauerhaft an und/oder in der Folienlasche verbleiben.

Zur Bestimmung des Wärmedurchgangskoeffzienten durch die Folienlasche ist erfindungsgemäß vorgesehen, dass
a) eine Heizfolie mit Temperatursensor auf dem evakuierten Körper in der Nähe dessen Randes platziert ist,
b) die mit einer dünnen Materiallage gefüllte Folienlasche darüber gelegt ist, und
c) darauf ein Kühlkörper liegt.

Ferner entspricht es der erfindungsgemäßen Lehre, dass sich die mit einer magnetischen oder magnetisierbaren Scheibe versehene Heizfolie und der mit einem Magnet ausgerüstete Kühlkörper durch magnetische Kräfte anziehen, so dass ein guter thermischer Kontakt zwischen der Folienlasche und dem Kühlkörper einerseits sowie zwischen der Folienlasche und der Heizfolie anderseits ergibt.

Weitere Vorteile bietet eine Heizfolie, die mit ihren elektrischen Anschlüssen permanent an/auf dem Vakuumelement verbleibt und nur zur Messung auf die Solltemperatur geheizt wird.

Die Erfindung zeichnet sich schließlich aus durch eine Kühleinrichtung, die - ggf. mit ihren (elektrischen) Anschlüssen - permanent auf dem Vakuumelement verbleibt.

Die beschriebene Erfindung zur Messung das Gasdruckes ist jedoch nicht beschränkt auf folienumhüllte, druckbelastbare Vakuumdämmplatten. Auch andere Vakuumelemente können mit einer Lasche ausgerüstet werden, die ein dünnes offenporiges Material enthalten und an der der gasdruckabhängige Wärmedurchgang mit den vorgestellten Methoden bestimmt werden kann. Anstelle einer Kunststoffolie kann zum Erstellen der Lasche z. B. auch eine dünne Edelstahlfolie zum Einsatz kommen mit einer Stärke von 50 µm oder bevorzugt 25 µm. Die Folienlasche kann mit Hilfe von Schweiß- und Siegeltechniken, mit Kleben oder sonstigen vakuumdichten Verbindungen mit dem Volumen des zu messenden Vakuumelementes verbunden sein. Die Folienlasche muss daher nicht aus dem gleichen Material bestehen wie der Rest des Vakuumelements.

Denkbar ist z. B. ein Einsatz des Messverfahrens in der Verpackungstechnik für Lebensmittel. Mit der Messmethode kann die Güte des Vakuums bei vakuumverpackten Produkten kontrolliert werden.

Weitere Merkmale, Einzelheiten, Vorteile und Wirkungen auf der Basis der Erfindung ergeben sich aus der folgenden Beschreibung bevorzugter Ausführungsformen der Erfindung sowie anhand der Zeichnung. Hierbei zeigt:

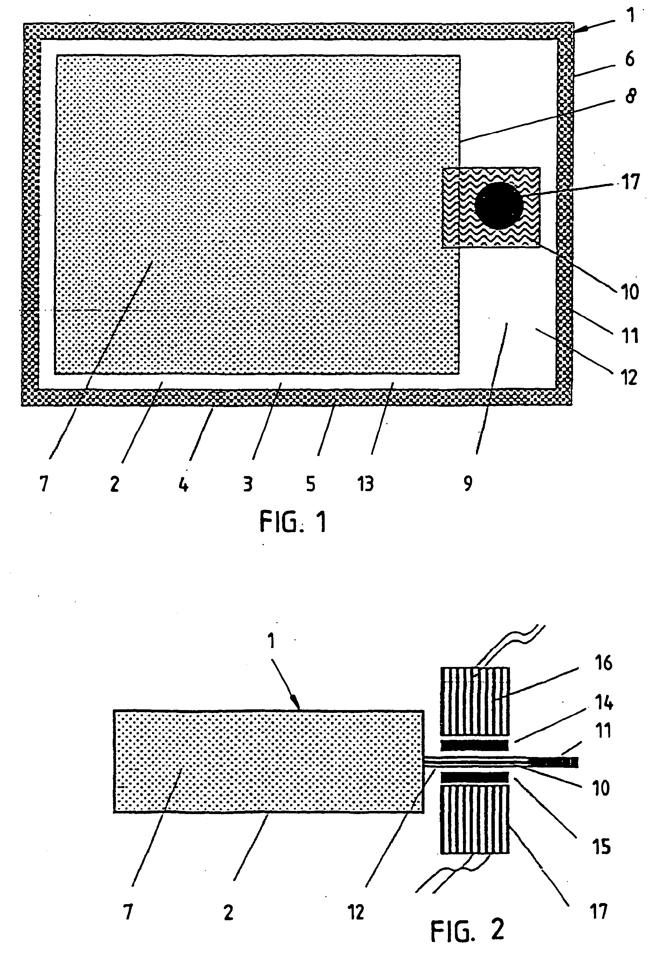

- Fig. 1: einen Schnitt durch eine erfindungsgemäße Vakuumdämmplatte entlang deren mittiger Grundebene, mit angedeuteter Meßapparatur;
- Fig. 2: einen Schnitt durch die Fig. 1 entlang der Linie II - 11;
- Fig.3: eine der Fig. 2 entsprechende Darstellung einer abgewandelten Ausführungsform der Erfindung, sowie
- Fig.4: die zur Aufrechterhaltung einer vorgegebenen Temperaturdifferenz erforderliche Heizleistung, aufgetragen über dem in der Vakuumdämmplatte herrschenden Gasdruck.

Zur Herstellung eines evakuierten Körpers 1 in Form einer Vakuumdämmplatte wird aus zwei übereinander liegenden Hochbarrierefolien 2 mit den Maßen 250 mm x 450 mm ein Beutel 3 hergestellt, indem die beiden Folien 2 entlang von drei der Seitenränder 4 über je eine Siegelnaht 5 miteinander verschweißt werden. Durch die noch offene Seite 6 des Beutels 3 wird eine getrocknete Kernplatte 7 aus mikroporöser Kieselsäure mit den Maßen 200 mm x 300 mm x 20 mm in den Beutel 3 geschoben. Aufgrund der erheblich kürzeren Kernplatte 7 im Verhältnis zur Länge des Beutels 3 verbleibt nach vollständig eingeschobener Kernplatte 7 zwischen deren Kante 8 und dem offenen Beutelrand 6 ein breiter, freier Bereich 9. In diesen wird eine dünne Materiallage, insbesondere ein Vlies 10 aus Mikroglasfasern, eingelegt, und zwar so, dass einerseits wenigstens etwa 10 bis 20 mm mit der Kernplatte 7 überlappen und andererseits der Siegelbereich 11 an der Beutelöffnung 6 frei bleibt. Die Maße des Vlieses 10 sollten etwa 50 mm in der Breite und 100 mm in der Länge betragen. Der Beutel 3 mit Kernplatte 7 und Vlies 10 wird in einer Vakuumkammer auf einen Gasdruck von ca. 1 mbar evakuiert und die letzte Siegelnaht 11 verschlossen. Dabei bildet der breite, nur (partiell) mit einem Vlies 10 belegte Bereich 9 eine Lasche 12, welche breiter ist als die Laschen 13 an den übrigen Seitenrändern 4. Nach dem Belüften der Vakuumkammer wird die einbaufertige Vakuumdämmplatte 1 entnommen.

Diese Materiallage 10 trennt die beiden Folienlagen 2 im Bereich der breiteren Lasche 12 thermisch voneinander. Daher kann nach Fertigstellung der Vakuumdämmplatte 1 der Wärmedurchgang durch die breitere Lasche 12 gemessen werden, und zwar dort, wo sich das Vlies 10 befindet. Daraus läßt sich der Gasdruck im Inneren der Vakuumdämmplatte 1 bestimmen. Für eine zuverlässige Messung sollte dabei die Größe der Meßfläche an der dünnen Materiallage 10 etwa 5 bis 10 cm² betragen. Daraus resultiert auch eine entsprechende Mindestgröße für die dünne Materiallage 10.

Bei der Bestimmung des Gasdrucks dienen zwei Wärmeflußmesser 14,15 zur Messung des Wärmedurchgangs durch die Folienlasche 12. Jeder der beiden Wärmeflußmesser 14,15 ist an jeweils einem beispielsweise plattenförmigen, temperierten Körper 16,17, vorzugsweise aus Metall, befestigt. Die beiden temperierten Körper 16,17 sind einander gegenüberliegend angeordnet und tragen an ihren einander zugewandten Flächen je einen Wärmeflußmesser 14,15.

Zur Messung wird die Folienlasche 2 mit Testvlies 10 zwischen diese beiden plattenförmigen Wärmeflußmesser 14,15 gelegt, wobei die unterschiedlich temperierten Körper 16,17, insbesondere Metallkörper, einander abgewandt sind bzw. nach außen weisen. Da die Wärmekapazitäten der beiden Lagen der Hüllfolien 2 der Lasche 12 und des dazwischen angeordneten, dünnen Vlieses 10 gering sind, stellt sich schnell ein stationärer Zustand des Wärmestroms ein.

Temperatursensoren im Bereich beider Wärmestrommesser 14,15 und/oder (Metall-) Körper 16,17 liefern die Temperaturdifferenz zwischen den beiden Wärmestrommessern 14,15. Aus dem Mittelwert des Wärmestroms beider Wärmestrommesser 14,15 wird der Wärmedurchgangskoeffizient des Systems Folie 2 - Testvlies 10 - Folie 2 bestimmt. Anschließend wird aus der bekannten Stärke der dünnen Materiallage 10 sowie aus dem ebenfalls bekannten Wärmewiderstand der beiden Folien 2 die Wärmeleitfähigkeit der dünnen Materiallage 10 berechnet. Aus der bekannten Abhängigkeit der Wärmeleitfähigkeit der dünnen Materiallage 10 vom Gasdruck, die über separate Messungen des Testvliesmaterials 10 bestimmbar ist, wird schließlich auf den Gasdruck im Inneren der Vakuumdämmplatte 1 geschlossen.

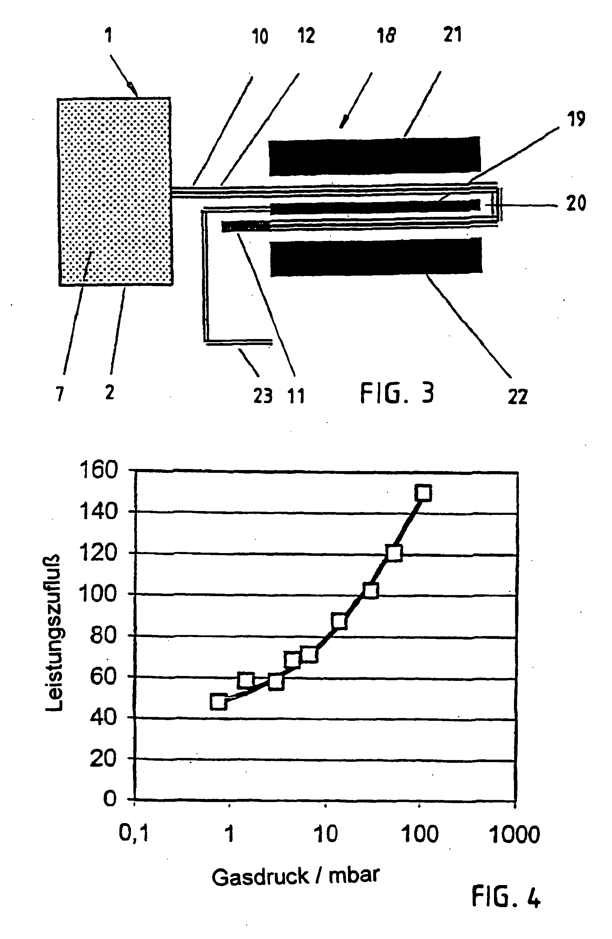

Fig. 3 zeigt eine abgewandelte Ausführungsform der Erfindung, wobei der Messkopf 18 nur aus einer dünnen Heizfolie 19 mit einem daran applizierten Temperatursensor für die Heizungsregelung. Zu diesem Zweck ist auf einer Heizfolie 19 mit einem Durchmesser von etwa 30 mm zur Steuerung und Temperaturmessung ein Thermoelementdraht befestigt.

Zur Messung wird die breite Lasche 12 der Vakuumdämmplatte 1 mit dem eingelegten Glasfaservlies 10 gemäß Fig. 3 um diese Heizfolie 19 herum gefaltet. Auf beiden Außenseiten der Falttasche 20 werden als Wärmesenken scheibenförmige Magnete 21,22 mit einem Durchmesser von jeweils etwa 30 mm und einer Stärke von etwa 10 mm angebracht, derart, dass sie sich gegenseitig anziehen und einen guten thermischen Kontakt mit der Folienlasche 12 ausbilden. Die elektrischen Anschlüsse 23 der Heizfolie 19 und des Temperatursensors werden an einen Regler angeschlossen. Die Heizspannung der Heizfolie 19 wird mit einem Meßgerät, insbesondere mit einem Digitalmultimeter gemessen oder mit Hilfe eines Wandlers (zusammen mit dem Temperatursignal) in einen Rechner eingelesen.

Gegenüber dem zuerst beschriebenen Verfahren, das nur eine Folienlasche 12 mit einer Breite von typischerweise etwa 30 mm benötigt, wird hier naturgemäß eine mindestens doppelt so breite, überstehende Lasche 24 mit innenliegender Vlieslage 25 benötigt, die um die Heizfolie 19 herumgelegt werden kann.

Die beiden Außenseiten der Folien 2 sind jeweils mit einer gekühlten Metallplatte in Form der beiden Magnete 21,22 Kontakt. Die Heizleistung der Heizfolie 19 fließt nun über beide Seiten nach außen in die kühlere Außenseite. Die gemessene stationäre Heizleistung - bezogen auf 1 K Temperaturdifferenz - ist wieder ein Maß für die Höhe des Gasdruckes in dem Vakuumpaneel 1.

Zur Messung des Wärmedurchgangs wird zunächst gewartet, bis sich die Temperaturen der Magnete 21,22, der Folienfalte 20 samt des eingelegten Vlieses 10 und der Heizfolie 19 aneinander sowie an die Umgebungstemperatur angeglichen haben. Die Temperatur der Heizfolie 19 wird beim Start der Messung schnell auf eine Solltemperatur von etwa 70 °C geregelt. Nach Abklingen instationärer Vorgänge wird die Heizleistung abgelesen. Zum Ende der Messung wird die Heizung wieder ausgeschaltet. Die gesamte Messdauer beträgt etwa 20 Sekunden.

Aus der gemessenen Heizspannung am Ende der Messung wird mit Hilfe des bekannten Widerstands der Heizfolie 19 die Heizleistung berechnet. Zur Bestimmung der Temperaturdifferenz zwischen Heizfolie 19 und den außenliegenden Wärmesenken 21,22 nimmt man an, dass deren Temperatur gegenüber dem Startzeitpunkt der Messung nur wenig ansteigt. Alternativ können auch Temperatursensoren an den Wärmesenken 21,22 angebracht und deren Temperaturen am Ende der Messzeit ebenfalls gemessen werden. Der auf diese Weise bestimmte Wärmedurchgangskoeffizient des Glasfaservlieses 10 wird mit Hilfe einer Eichfunktion oder einer Tabelle in den Gasdruck der Vakuumdämmplatte 1 umgerechnet.

Ein Beispiel für eine zur Eichung genutzte Messreihe ist in dem Diagramm von Fig. 4 dargestellt. Dort ist für ein Mikroglasfaservlies 10 als Einlage in einer Folienlasche 12 die in die Heizfolie 19 eingebrachte Leistung - normiert auf die Temperaturdifferenz der Heizfolie 19 gegenüber den Wärmesenken 21,22 - bei verschiedenen Gasdrücken gemessen worden. Der jeweilige Gasdruck wurde separat mit einem Gasdruckmanometer bestimmt. Die durchgezogene Linie ist eine Fitfunktion durch die Messpunkte. Aus deren Umkehrfunktion kann nun bei vorgegebenem Messwert der jeweilige Gasdruck im Bereich 1 bis 100 mbar berechnet werden.

Die beschriebene Anordnung eignet sich sogar zur Messung des Gasdruckes in Vakuumdämmplatten 1, die dauerhaft in ein Objekt eingebaut sind. Es verbleiben nur die Heizfolie 19 mit dem Temperatursensor und die beiden Magnete 21,22 an der Vakuumdämmplatte. Die vier Anschlussdrähte 23 werden mit einer geeigneten Buchse verbunden und so verlegt, dass sie am Objekt für die Messapparatur zugänglich sind. Auf diese Weise kann an einzelnen ausgewählten Wärmedämmplatten 1 der Verlauf des Gasdruckanstiegs im Bereich zwischen 1 mbar und 100 mbar über Jahre hinweg verfolgt werden.

## Patentansprüche

1. Verfahren zur Bestimmung des Gasdruckes in einem Vakuumelement oder in einem evakuierten Körper mit einer folienartigen Umhüllung anhand eines thermischen Meßverfahrens, **dadurch gekennzeichnet, dass** an einer Lasche (12) an der Außenseite des Vakuumelements, die von zwei Folienseiten (2) gebildet ist, welche im Bereich des freien Randes der Lasche (12) miteinander verbunden sind und einen Zwischenraum begrenzen, der mit dem Raum innerhalb der Umhüllung des Vakuumelements kommuniziert und zumindest teilweise durch eine offenporige, dünne Materiallage (10) gefüllt ist, der gasdruckabhängige Wärmedurchgangskoeffzient an wenigstens einer Stelle der Materiallage (10) gemessen wird.

2. Verfahren nach Anspruch 1, **dadurch gekennzeichnet, dass** zur Messung des Wärmedurchgangskoeffizienten der Lasche (12)
a) auf einer Seite der Folienlasche (12) ein erster temperierter Körper (16,17;19,21,22) verwendet wird, bevorzugt aus Metall, insbesondere mit einem anliegenden, der Folienlasche (12) zugewandten Wärmestrommesser (14), und
b) auf der anderen Seite der Folienlasche (12) ein weiterer temperierter Körper (16,17;19,21,22) mit einer von dem ersten Körper (16) unterschiedlichen Temperatur, bevorzugt aus Metall, insbesondere mit einem anliegenden, der Folienlasche (12) zugewandten Wärmestrommesser (15), wobei
c) vorzugsweise zur Messung des Wärmestroms die beiden, auf die jeweilige Solltemperatur temperierten Messköpfe (14,16 und 15,17;19,21,22) von beiden Seiten mit einander zugewandten Messflächen an der Folienlasche (12) in Kontakt gebracht werden.

3. Verfahren nach einem der vorhergehenden Ansprüche, **dadurch gekennzeichnet, dass** ein Körper (16,17;21,22) verwendet wird, der anstelle eines Wärmeflussmessers (14,15) nur eine Heizfolie (19) enthält, deren elektrische Leistung ein Maß für den Wärmedurchgangskoeffizient der Folienlasche (12) ist und die gegebenenfalls von einem Schutzring gleicher Temperatur umgeben ist.

4. Verfahren nach einem der vorhergehenden Ansprüche, **dadurch gekennzeichnet, dass** ein guter thermischer Kontakt zwischen der Folienlasche (12) einerseits und den beiden, auf unterschiedlichen Seiten der Folienlasche (12) liegenden Körpern (16,17;21,22) durch magnetische Anziehungskräfte bewirkt wird, welche zwischen einander zugewandten, entgegengesetzten Magnetpolen an oder im Bereich der beiden Körper (16,17;21,22) auftreten.

5. Verfahren nach einem der vorhergehenden Ansprüche, **dadurch gekennzeichnet, dass** wenigstens ein Körper (16,17;19,21,22)
a) mit wenigstens einem Heizelement geheizt und auf eine konstante Temperatur geregelt wird, oder
b) mit wenigstens einer Kühleinrichtung wie einem Peltierelement, Wärmetauscher, insbesondere für Kühlwasser, Lüfter, oder durch natürliche Konvektion gekühlt und auf einer möglichst konstanten Temperatur nahe der Raumtemperatur oder darunter gehalten wird.

6. Verfahren nach einem der vorhergehenden Ansprüche, **dadurch gekennzeichnet, dass** die Folienlasche (12) mit der Materiallage (10) einmal um 180 ° gefaltet wird, wobei vorzugsweise ein Folienheizelement (19) mit Temperatursensor innerhalb oder Falte der gefalteten Folienlasche (12) mit Einlage (10) platziert wird, und vorzugsweise an einer oder beiden Außenseiten der gefalteten Folienlasche (12) (je) ein Kühlkörper (16,17;21,22) oder (je) eine Kühleinrichtung mit im Vergleich zum Folienheizelement (19) niedrigerer Temperatur, dem Folienheizelement (19) etwa gegenüber liegend.

7. Verfahren nach einem der vorhergehenden Ansprüche, **dadurch gekennzeichnet, dass** zur Bestimmung des Wärmedurchgangskoeffzienten durch die Folienlasche (12)
a) eine Heizfolie (19) mit Temperatursensor auf den evakuierten Körper (1) in der Nähe des Randes (4,6) bzw. nahe der Folienlasche (12) platziert wird,
b) die mit einer dünnen Materiallage (10) gefüllte Folienlasche (12) darüber gelegt wird,
c) darauf ein Kühlkörper (16,17;21,22) oder eine Kühleinrichtung gelegt wird, und
d) die Heizleistung der Folie (19) zum Erreichen und Konstanthalten einer vorgegebenen Temperatur gemessen wird.

8. System zur Bestimmung des Gasdruckes mit Hilfe eines thermischen Meßverfahrens in einem Vakuumelement oder evakuierten Körper (1), an dessen Außenseite eine Lasche (12) ausgebildet ist, die von zwei Folienseiten (2) begrenzt ist, welche im Bereich des freien Randes (4,6) der Lasche (12) miteinander verbunden sind (5,11), **dadurch gekennzeichnet, dass**
a) der Raum (9) zwischen den beiden Folienseiten (2) der Lasche (12) mit dem Raum innerhalb der Umhüllung (3) des Vakuumelements (1) kommuniziert und zumindest teilweise durch eine offenporige, dünne Materiallage (10) gefüllt ist, und
b) eine Einrichtung (14-17;18,19,21,22) zur Messung des gasdruckabhängigen Wärmedurchgangskoeffzienten der Lasche (12) am Ort der Materiallage (10) vorgesehen ist.

9. System nach Anspruch 8, **dadurch gekennzeichnet, dass** die offenporige dünne Materiallage (10) in einem Vlies aus anorganischen oder organischen Fasern besteht, bevorzugt aus einem Glasfaservlies oder Kunststofffaservlies mit einem Flächengewicht zwischen 10 g/m² und 500 g/m², vorzugsweise zwischen 30 g/m² und 200 g/m², insbesondere zwischen 50 g/m² und 100 g/m², oder in einem Gewebe aus organischen oder anorganischen Fasern, einer in einer organischen oder anorganischen Schaumschicht, oder in einer organischen oder anorganischen Aerogelschicht, oder in einem organischen oder anorganischen Pulver oder in einem Papier besteht.

10. System nach einem der Ansprüche 8 oder 9, **gekennzeichnet durch** wenigstens einen Meßkopf (14-17;18,19,21,22) mit wenigstens einem temperierten oder temperierbaren Körper (16,17;19,21,22), vorzugsweise aus Metall, mit einer Fläche zur Anlage an einem Oberflächenbereich der Lasche (12) eines zu messenden Vakuumelements (1).

11. System nach einem der Ansprüche 8 bis 10, **gekennzeichnet durch** wenigstens einen Meßkopf (14-17;18,19,21,22) mit wenigstens einem Wärmestrommesser (14,15), vorzugsweise an oder im Bereich einer zur Anlage an einem Oberflächenbereich der Lasche (12) dienenden Fläche.

12. System nach einem der Ansprüche 10 oder 11, **gekennzeichnet durch** zwei Meßköpfe (14-17;18,19,21,22) mit (je) einem temperierten oder temperierbaren Körper (16,17;19,21,22) und/oder mit (je) einem Wärmestrommesser (14,15), deren Anlageflächen zur Anlage an je einem Oberflächenbereich einer Lasche (12) des zu messenden Vakuumelements (1) einander zugewandt sind, wobei die temperierten Körper (16,17:19,21,22) der beiden Meßköpfe (14-17;18,19,21,22) unterschiedliche Temperaturen haben.

13. System nach einem der Ansprüche 10 bis 12, **gekennzeichnet durch** einen oder mehrere Temperatursensoren zur Erfassung der Temperaturen der temperierten Körper (16,17;19,21,22) und/oder der Wärmestrommesser (14,15), die in direktem Kontakt mit dem betreffenden Körper (16,17;19,21,22) und/oder Wärmestrommesser (14,15) stehen.

14. System nach einem der Ansprüche 10 bis 13, **dadurch gekennzeichnet, dass** wenigstens ein Körper (16,17;19,21,22) anstelle eines Wärmeflussmessers (14;15) nur eine Heizfolie (19) enthält, deren elektrische Leistung ein Maß für den Wärmedurchgangskoeffizient der Folienlasche (12) ist und die gegebenenfalls von einem Schutzring gleicher Temperatur umgeben ist.

15. System nach einem der Ansprüche 10 bis 14, **dadurch gekennzeichnet, dass** einem ersten Körper (16,17;19,21,22) an einer Seite der Lasche (12) ein weiterer Körper (16,17;19,21,22), insbesondere eine Metallplatte, auf der anderen Seite der Lasche (12) gegenüber liegt, der auf einer möglichst gleichmäßigen, gegenüber dem ersten Körper (16,17;19,21,22) unterschiedlichen Temperatur gehalten ist, wobei vorzugsweise sich die beiden auf unterschiedlichen Seiten der Folienlasche (12) liegenden Körper (16,17;19,21,22) magnetisch anziehen, so dass ein guter thermischer Kontakt zwischen der Folienlasche (10) einerseits und den an beiden Seiten anliegenden Meßköpfen (14-17;18,19,21,22) andererseits gewährleistet ist.

16. System nach einem der Ansprüche 10 bis 15, **dadurch gekennzeichnet, dass** wenigstens ein Körper (16,17;19,21,22)
a) mit wenigstens einem Heizelement (19) zu seiner Aufheizung und/oder Temperaturregelung gekoppelt oder koppelbar ist, oder
b) mit wenigstens einem Kühlelement (21,22) und/oder mit wenigstens einer Kühleinrichtung, bspw. einem Peltierelement, Wärmetauscher, insbesondere für Kühlwasser, Lüfter oder Kühlrippen, insbesondere für eine natürliche Konvektion, gekoppelt oder koppelbar ist, um auf einer Temperatur nahe der Raumtemperatur oder darunter gehalten zu werden.

17. System nach einem der Ansprüche 8 bis 16, **dadurch gekennzeichnet, dass** die Folienlasche (12) mit der Materiallage (10) wenigstens einmal um mehr als 90° gefaltet ist, bevorzugt um etwa 180°, wobei vorzugsweise ein Folienheizelement (19) mit Temperatursensor innerhalb der Falte (20) der gefalteten Folienlasche (12) samt Materialeinlage (10) platziert ist, und wobei bevorzugt an einer oder beiden, einander abgewandten Außenseiten der Folienlasche (12) wenigstens ein Kühlkörper (21,22) platziert ist, vorzugsweise mit im Vergleich zum Folienheizelement (19) niedrigerer Temperatur.

18. System nach Anspruch 17, **gekennzeichnet durch** ein Meßelement, vorzugsweise bestehend aus einer Heizfolie (19), einem Temperatursensor sowie ggf. Kühlkörpern (21,22), welches dauerhaft an und/oder in der Folienlasche (12) verbleibt.

19. System nach einem der Ansprüche 8 bis 18, **dadurch gekennzeichnet, dass** zur Bestimmung des Wärmedurchgangskoeffzienten durch die Folienlasche (12)
a) eine Heizfolie (19) mit Temperatursensor auf dem evakuierten Körper (1) in der Nähe dessen Randes (4,6) platziert ist,
b) die mit einer dünnen Materiallage (10) gefüllte Folienlasche (12) darüber gelegt ist, und
c) darauf ein Kühlkörper (21,22) liegt.

20. System nach einem der Ansprüche 8 bis 19, **gekennzeichnet durch** eine Heizfolie (19), die mit ihren elektrischen Anschlüssen (23) permanent an/auf dem Vakuumelement (1) verbleibt und nur zur Messung auf die Solltemperatur geheizt wird.

21. System nach einem der Ansprüche 8 bis 20, **gekennzeichnet durch** eine Kühleinrichtung, die - ggf. mit ihren (elektrischen) Anschlüssen - permanent auf dem Vakuumelement (1) verbleibt.

## Claims

1. Method for determining the gas pressure in a vacuum element or in an evacuated body having a film-like envelope through the use of a thermal measurement method, **characterized in that** the gas-pressure-dependent heat transfer coefficient is measured from a flap (12) disposed on the exterior of said vacuum element and formed by two film faces (2) which are joined together in the region of the free edge of said flap (12) and which delimit a gap that communicates with the space inside said envelope of said vacuum element and is at least partially filled with an open-pored, thin material layer (10), said heat transfer coefficient being measured at at least one point of said material layer (10).

2. Method according to claim 1, **characterized in that** the heat transfer coefficient of said flap (12) is measured by means of
a) on one face of said film flap (12), a first temperature regulated body (16, 17; 19, 21, 22), preferably of metal, particularly with an adjacent heat flow meter (14) that faces toward said film flap (12), and
b) on the other face of said film flap (12), another temperature regulated body (16, 17; 19, 21, 22) having a different temperature from said first body (16) and preferably of metal, particularly with an adjacent heat flow meter (15) that faces toward said film flap (12), wherein
c) in order to measure the heat flow, preferably the two measuring heads (14, 16 and 15, 17; 19, 21, 22), which are regulated to the particular nominal temperature, are brought into contact with said film flap (12) from both sides with their measurement areas facing each other.

3. Method according to one of the preceding claims, **characterized in that** a body (16, 17; 21, 22) is used which comprises, instead of a heat flow meter (14, 15), only a heating film (19) whose electrical power is a measure of the heat transfer coefficient of said film flap (12) and which may, as appropriate, be surrounded by a guard ring of the same temperature.

4. Method according to one of the preceding claims, **characterized in that** good thermal contact between said film flap (12), on the one hand, and the two said bodies (16, 17; 21, 22) disposed on different sides of said film flap (12) is brought about by magnetic attraction forces occurring between mutually facing, contrary magnetic poles at or in the region of said two bodies (16, 17; 21, 22).

5. Method according to one of the preceding claims, **characterized in that** at least one said body (16, 17; 19, 21, 22)
a) is heated and regulated to a constant temperature by means of at least one heating element, or
b) is cooled by means of at least one cooling device such as a Peltier element, a heat exchanger, particularly for coolant, a fan, or by natural convection, and is maintained at as constant a temperature as possible near ambient temperature or therebelow.

6. Method according to one of the preceding claims, **characterized in that** said film flap (12) comprising said material layer (10) is folded once by 180°, whereby a film heating element (19) comprising a temperature sensor is placed within the fold of the folded said film flap (12) with liner (10), and on one or each outer face of said folded film flap (12) is placed a (respective) cooling body (16, 17; 21, 22) or a (respective) cooling device that has a lower temperature than said film heating element (19) and is disposed roughly opposite said film heating element (19).

7. Method according to one of the preceding claims, **characterized in that** to determine the heat transfer coefficient through said film flap (12),
a) a heating film (19) comprising a temperature sensor is placed on said evacuated body (1) in the vicinity of the edge (4, 6) or near said film flap (12),
b) said film flap (12) filled with a thin material layer (10) is laid thereover,
c) a cooling body (16, 17; 21, 22) or a cooling device is placed thereon, and
d) the thermal power of said film (19) is measured until a predetermined temperature is reached and held constant.

8. System for determining by means of a thermal measurement method the gas pressure in a vacuum element or evacuated body (1) on whose exterior is configured a flap (12) delimited by two film faces (2) that are joined together (5, 11) in the region of the free edge (4, 6) of said flap (12), **characterized in that**
a) the space (9) between said two film faces (2) of said flap (12) communicates with the space inside the envelope (3) of said vacuum element (1) and is at least partially filled with an open-pored, thin material layer (10), and
b) a device (14-17; 18, 19, 21, 22) is provided for measuring the gas-pressure-dependent heat transfer coefficient of said flap (12) at the location of said material layer (10).

9. System according to claim 8, **characterized in that** said open-pored, thin material layer (10) consists of a matting made of inorganic or inorganic fibers, preferably of a glass fiber matting or a synthetic fiber matting having a weight per unit area of between 10 g/m² and 500 g/m², preferably between 30 g/m² and 200 g/m², particularly between 50 g/m² and 100 g/m², or a fabric made of organic or inorganic fibers, an organic or inorganic foam layer, or an organic or inorganic aerogel layer, or an organic or inorganic powder or a paper.

10. System according to one of claims 8 or 9, **characterized by** at least one measuring head (14-17; 18, 19, 21, 22) comprising at least one temperature regulated or temperature regulatable body (16, 17; 19, 21, 22), preferably of metal, having a surface that is to be placed against a surface region of said flap (12) of a vacuum element (1) to be tested.

11. System according to one of claims 8 to 10, **characterized by** at least one measuring head (14-17; 18, 19, 21, 22) comprising at least one heat flow meter (14, 15), preferably disposed at or in the region of a surface serving to be placed against a surface region of said flap (12).

12. System according to one of claims 10 or 11, **characterized by** two measuring heads (14-17; 18, 19, 21, 22), (each) comprising a temperature regulated or temperature regulatable body (16, 17; 19, 21, 22) and/or (each) equipped with a heat flow meter (14, 15), whose contact surfaces to be placed against a respective surface region of a flap (12) of the vacuum element (1) under test face each other, whereby said temperature regulated bodies (16, 17; 19, 21, 22) of said two measuring heads (14-17; 18, 19, 21, 22) have different temperatures.

13. System according to one of claims 10 to 12, **characterized by** one or more temperature sensors operative to detect the temperatures of said temperature regulated bodies (16, 17; 19, 21, 22) and/or of said heat flow meters (14, 15) and standing in direct contact with the relevant said body (16, 17; 19, 21, 22) and/or heat flow meter (14, 15).

14. System according to one of claims 10 to 13, **characterized in that** at least one body (16, 17; 19, 21, 22) comprises, instead of a heat flow meter (14, 15), only a heating film (19), whose electrical power is a measure of the heat transfer coefficient of said film flap (12) and which may, as appropriate, be surrounded by a guard ring of the same temperature.

15. System according to one of claims 10 to 14, **characterized in that** disposed opposite a first body (16, 17; 19, 21, 22) located on one side of said flap (12) is another body (16, 17; 19, 21, 22), particularly a metal plate, which is located on the other side of said flap (12) and is maintained at a temperature that is a uniform as possible and is different from [that of] said first body (16, 17; 19, 21, 22), whereby preferably the two said bodies (16, 17; 19, 21, 22) disposed on different sides of said film flap (12) attract each other magnetically, thus ensuring good thermal contact between said film flap (10), on the one hand, and said measuring heads (14-17; 18, 19, 21, 22) resting each against a respective one of the two sides, on the other.

16. System according to one of claims 10 to 15, **characterized in that** at least one body (16, 17; 19, 21, 22)
a) is or can be coupled to at least one heating element (19) in order to heat it and/or regulate its temperature, or
b) is or can be coupled to at least one cooling element (21, 22) and/or to at least one cooling device, for example a Peltier element, a heat exchanger, particularly for coolant, a fan or cooling fins, particularly for natural convection, in order to maintain it at a temperature near or below ambient temperature.

17. System according to one of claims 8 to 16, **characterized in that** said film flap (12) comprising said material layer (10) is folded at least once by more than 90°, particularly by approximately 180°, whereby preferably a film heating element (19) comprising a temperature sensor is placed within the fold (20) of the folded said film flap (12) together with its material insert (10), and whereby preferably a cooling body (21, 22), preferably having a lower temperature than said film heating element (19), is placed against one or both of the mutually averted outer faces of said film flap (12).

18. System according to claim 17, **characterized by** a measuring element, which preferably consists of a heating film (19), a temperature sensor and, as appropriate, cooling bodies (21, 22), and which remains permanently against and/or in said film flap (12).

19. System according to one of claims 8 to 18, **characterized in that** to determine the heat transfer coefficient through said film flap (12),
a) a heating film (19) comprising a temperature sensor is placed on the evacuated body (1) in the vicinity of its edge (4, 6),
b) said film flap (12) filled with a thin material layer (10) is placed thereover, and
c) a cooling body (21, 22) rests thereon.

20. System according to one of claims 8 to 19, **characterized by** a heating film (19) which by its electrical connectors (23) remains permanently at/on said vacuum element (1) and is heated to the nominal temperature only to perform a measurement.

21. System according to one of claims 8 to 20, **characterized by** a cooling device which - by its (electrical) connectors, as appropriate - remains permanently on said vacuum element (1).

## Revendications

1. Méthode de détermination de la pression de gaz dans un élément sous vide ou dans un corps mis sous vide avec une enveloppe réalisée sous forme de feuille au moyen d'un procédé de mesure thermique, **caractérisée en ce qu'**au niveau d'une feuille de liaison (12) sur la face extérieure de l'élément sous vide, qui est réalisée par deux faces de feuille (2), lesquelles sont reliées ensemble dans la zone du bord libre de la feuille de liaison (12) et délimitent un espace qui communique avec l'espace à l'intérieur de l'enveloppe de l'élément sous vide, et qui est remplie tout au moins partiellement par une mince couche de matériaux (10) à pores ouverts, le coefficient de transmission thermique dépendant de la pression du gaz étant mesuré au moins à un point de la couche de matériaux (10).

2. Méthode selon la revendication 1, **caractérisée en ce que** pour la mesure du coefficient de transmission thermique de la feuille de liaison (12)
a) est utilisé sur une face de la feuille de liaison (12) un premier corps tempéré (16,17;19,21,22), de préférence en métal, en particulier avec un capteur de flux thermique (14) adjacent, orienté vers la feuille de liaison (12), et
b) sur l'autre face de la feuille de liaison (12), un autre corps tempéré (16,17;19,21,22) avec une température différente de celle du premier corps 16), de préférence en métal, en particulier avec un capteur de flux thermique (15) adjacent, orienté vers la feuille de liaison (12), où
c) de préférence pour la mesure du flux thermique, les deux têtes de mesure (14,16 et 15,17;19,21,22) tempérées à la température de consigne respective sont amenées en contact des deux côtés avec les surfaces de mesure tournées les unes vers les autres au niveau de la feuille de liaison (12).

3. Méthode selon l'une des revendications précédentes, **caractérisée en ce qu'**un corps (16,17;21,22) est utilisé, lequel comprend à la place d'un capteur de flux thermique (14,15) seulement une feuille chauffante (19) dont la puissance électrique est une valeur pour le coefficient de transmission thermique de la feuille de liaison (12) et qui, le cas échéant, est entouré d'un anneau de protection de même température.

4. Méthode selon l'une des revendications précédentes, **caractérisée en ce qu'**un bon contact thermique entre, d'une part, la feuille de liaison (12) et les deux corps (16,17;21,22) situés sur différentes faces de la feuille de liaison (12), est engendré par des forces d'attraction magnétiques qui surviennent entre des pôles magnétiques opposés, positionnés les uns par rapport aux autres, au niveau ou dans la zone des deux corps (16,17;21,22) .

5. Méthode selon l'une des revendications précédentes, **caractérisée en ce qu'**au moins un corps (16,17;19,21,22)
a) est chauffé avec au moins un élément chauffant et réglé à une température constante, ou
b) est refroidi avec au moins un dispositif de refroidissement tel qu'un élément Peltier, échangeur thermique, en particulier pour eau de refroidissement, ventilateur ou par convection naturelle et maintenu à une température la plus constante possible proche de la température ambiante ou en dessous de celle-ci.

6. Méthode selon l'une des revendications précédentes, **caractérisée en ce que** la feuille de liaison (12) avec la couche de matériaux (10) est pliée une fois à 180 °, de préférence un élément chauffant de la feuille (19) avec capteur de température étant placé dans le pli de la feuille de liaison (12) pliée avec insert (10) et, de préférence, sur l'une ou les deux faces extérieures de la feuille de liaison (12) pliée, (respectivement) un corps refroidisseur (16,17;21,22) ou (respectivement) un dispositif de refroidissement étant approximativement opposé à l'élément chauffant de la feuille (19) par rapport à l'élément chauffant de la feuille (19) de plus basse température.

7. Méthode selon l'une des revendications précédentes, **caractérisée en ce que** pour la détermination du coefficient de transmission thermique par la feuille de liaison (12)
a) une feuille chauffante (19) avec capteur de température est placée sur le corps mis sous vide (1) à proximité du bord (4,6) ou près de la feuille de liaison(12),
b) la feuille de liaison (12) remplie d'une mince couche de matériaux (10) y est superposée,
c) sur laquelle est placé un corps refroidisseur (16,17;21,22) ou un dispositif de refroidissement, et
d) la puissance calorifique de la feuille (19) est mesurée pour atteindre et maintenir constante une température prédéfinie.

8. Système pour la détermination de la pression de gaz à l'aide d'un procédé de mesure thermique dans un élément sous vide ou un corps mis sous vide (1), une feuille de liaison (12) étant réalisée sur sa face extérieure, laquelle est délimitée par les deux faces de la feuille (2) qui sont reliées entre elles (5,11) dans la zone du bord libre (4,6) de la feuille de liaison (12), **caractérisé en ce que**
a) l'espace (9) entre les deux faces du film (2) de la feuille de liaison (12) communique avec l'espace à l'intérieur de l'enveloppe (3) de l'élément sous vide (1) et est rempli au moins partiellement par une mince couche de matériaux (10) à pores ouverts, et
b) un dispositif (14-17;18,19,21,22) est prévu pour la mesure du coefficient de transmission thermique dépendant de la pression de gaz de la feuille de liaison (12) au point de la couche de matériaux (10) .

9. Système selon la revendication 8, **caractérisé en ce que** la mince couche de matériaux (10) à pores ouverts se compose d'un non-tissé en fibres inorganiques ou organiques, de préférence en non-tissé de fibre de verre ou non-tissé de fibre synthétique d'une masse surfacique comprise entre 10 g/m² et 500 g/m², de préférence entre 30 g/m² et 200 g/m², en particulier entre 50 g/m² et 100 g/m², ou consiste en un tissu de fibres organiques ou inorganiques, en une couche de mousse organique ou inorganique, ou en une couche d'aérogel organique ou inorganique, ou en une poudre organique ou inorganique ou en un papier.

10. Système selon l'une des revendications 8 ou 9, **caractérisé en** au moins une tête de mesure (14-17;18,19,21,22) avec au moins un corps tempéré ou pouvant être tempéré (16,17;19,21,22), de préférence en métal, avec une surface vers l'installation au niveau d'une zone de surface de la feuille de liaison (12) d'un élément sous vide (1) à mesurer.

11. Système selon l'une des revendications 8 à 10, **caractérisé en** au moins une tête de mesure (14-17;18,19,21,22) avec au moins un capteur de flux thermique (14,15), de préférence au niveau ou dans la zone d'une surface servant à l'installation sur une zone de surface de la feuille de liaison (12).

12. Système selon l'une des revendications 10 ou 11, **caractérisé par** deux têtes de mesure (14-17;18,19,21,22) avec (respectivement) un corps tempéré ou pouvant être tempéré (16,17;19,21,22) et/ou avec (respectivement) un capteur de flux thermique (14,15) dont les surfaces de contact par rapport à l'installation au niveau de chaque zone de surface d'une feuille de liaison (12) sont tournées vers l'élément sous vide (1) à mesurer, les corps tempérés (16,17;19,21,22) des deux têtes de mesure (14-17;18,19,21,22) ayant des températures différentes.

13. Système selon l'une des revendications 10 à 12, **caractérisé par** un ou plusieurs capteurs de température pour la saisie des températures des corps tempérés (16,17;19,21,22) et/ou le capteur de flux thermique (14,15), qui sont en contact direct avec le corps en question (16,17;19,21,22) et/ou le capteur de flux thermique (14,15).

14. Système selon l'une des revendications 10 à 13, **caractérisé en ce qu'**au moins un corps (16,17;19,21,22) contient uniquement une feuille chauffante (19) au lieu d'un capteur de flux thermique (14,15), dont la puissance électrique est une valeur pour le coefficient de transmission thermique de la feuille de liaison (12) et, le cas échéant, est entouré d'un anneau de protection de même température.

15. Système selon l'une des revendications 10 à 14, **caractérisé en ce qu'**un autre corps (16,17;19,21,22), en particulier une plaque en métal, sur l'autre face de la feuille de liaison (12), est opposé à un premier corps (16,17;19,21,22) sur une face de la feuille de liaison (12), qui est maintenu à une température différente, la plus régulière possible, par rapport au premier corps (16,17;19,21,22), où de préférence les deux corps (16,17;19,21,22) situés sur des faces différentes de la feuille de liaison (12) exercent une attraction magnétique de sorte que, d'une part, un bon contact thermique soit assuré entre la feuille de liaison (10) et, d'autre part, entre les têtes de mesure (14-17;18,19,21,22) adjacentes aux deux faces.

16. Système selon l'une des revendications 10 à 15, **caractérisé en ce qu'**au moins un corps (16,17;19,21,22)
a) avec au moins un élément chauffant (19) est couplé ou peut être couplé à son chauffage et/ou régulation de température, ou
b) avec au moins un élément de refroidissement (21,22) et/ou au moins un dispositif de refroidissement, par exemple un élément Peltier, échangeur thermique, en particulier pour eau de refroidissement, ventilateur ou ailettes de refroidissement, en particulier pour une convection naturelle, est couplé ou peut être couplé pour être maintenu à une température proche de la température ambiante ou en dessous de celle-ci.

17. Système selon l'une des revendications 8 à 16, **caractérisé en ce que** la feuille de liaison (12) avec la couche de matériaux (10) est au moins pliée une fois à plus de 90 °, de préférence approximativement à 180 °, un élément chauffant de la feuille (19) avec capteur de température étant placé de préférence à l'intérieur du pli (20) de la feuille de liaison pliée (12) y compris la couche de matériaux (10), et où est placé de préférence sur l'une ou sur les deux faces extérieures éloignées les unes des autres de la feuille de liaison (12) au moins un corps refroidisseur (21, 22), de préférence de température plus basse par rapport à l'élément chauffant de la feuille (19).

18. Système selon la revendication 17, **caractérisé par** un élément de mesure, de préférence comprenant une feuille chauffante (19), un capteur de température ainsi que, le cas échéant, des corps refroidisseurs (21, 22), qui reste en permanence sur et/ou dans la feuille de liaison (12).

19. Système selon l'une des revendications 8 à 19, **caractérisé en ce que** pour la détermination du coefficient de transmission thermique par la feuille de liaison (12)
a) une feuille chauffante (19) avec capteur de température est placée sur le corps mis sous vide (1) à proximité de son bord (4, 6),
b) une feuille de liaison (12) remplie d'une mince couche de matériaux (10) y est superposée, et
c) un corps refroidisseur (21, 22) y est installé.

20. Système selon l'une des revendications 8 à 19, **caractérisé par** une feuille chauffante (19) qui reste avec ses raccordements électriques (23) en permanence au niveau de/sur l'élément sous vide (1) et qui n'est chauffée que pour la mesure à la température de consigne.

21. Système selon l'une des revendications 8 à 20, **caractérisé par** un dispositif de refroidissement qui, le cas échéant, reste avec ses raccordements (électriques) en permanence sur l'élément sous vide (1).
